# DEMANDE DE BREVET EUROPEEN

(11) **EP 1 094 263 A1**
(43) Date de publication de la demande: **25.04.2001**
(21) Numéro de dépôt: 00420207.3
(22) Date de dépôt: 11.10.2000
(51) Int. Cl.: F16L 1/11

(54) **Raidisseur pour grillage avertisseur étroit avec fil de détection**

(30) Priorité: 19.10.1999 FR 9913246
(71) Demandeur: ETABLISSEMENTS COURANT SA, F-01570 Manziat (FR)
(72) Inventeur: Muet, Pascale, 01190 Chavannes S/Reyssouze (FR)
(74) Mandataire: Perrier, Jean-Pierre

(57) **Abrégé**

Le grillage avertisseur avec fil de détection est composé d'une d'une nappe (2) en matière plastique comportant des lacunes longitudinales (3) et d'un fil métallique (4) de détection s'étendant suivant une direction longitudinale, ledit fil étant fixé sur la nappe (2) par collage au moyen d'une bande adhésive longitudinale (5), le recouvrant au moins localement.

Selon l'invention, le raidisseur est constitué par le fil métallique de détection (4) s'étendant également transversalement sur une partie de la largeur de la nappe (2) du grillage en décrivant une trajectoire ondulée, sinusoïdale ou en dents de scie, et compensant les contraintes de tension exerçée sur la nappe par la bande adhésive (5) en empêchant la dite bande de se cintrer.

## Description

L'invention concerne un raidisseur transversal pour grillage avertisseur avec fil de détection.

Pour repérer les réseaux enterrés, il est connu de disposer longitudinalement au-dessus d'eux et dans la fouille un grillage avertisseur permettant ultérieurement de repérer la position du réseau et, lors du creusement, de signaler sa proximité.

Ces grillages sont réalisés en matière plastique, tel qu'en polyéthylène, et comportent des lumières ou lacunes longitudinales qui favorisent leur rupture lors de leur sectionnement par le godet d'un engin de terrassement et surtout permettent de former des fragments ou lambeaux indiquant la proximité du réseau protégé.

Pour faciliter la détection du réseau à partir de la surface du sol, la nappe constituant le grillage est associée à un fil métallique qui est disposé longitudinalement, comme décrit par exemple dans le document FR-A-2644248. De façon connue, le fil fournit une résistance à la traction , de l'ordre de 10 daN, lui permettant d'être rompu par le godet d'une pelle creusant une fouille.

De tels grillages doivent satisfaire à des normes et, par exemple, à la norme française NF - T 54-080 ou NF - C 2995, exigeant, en particulier, une pose à plat du grillage dans la fouille et une formation régulière de lambeaux de grillage se mêlant à la terre extraite pour annoncer la proximité du réseau.

Si la plupart des grillages satisfont, sans difficulté, aux contraintes de la norme, il s'avère que ceux, ayant une largeur inférieure à 10 centimètres, et dans lesquels le fil métallique est fixé au moyen d'une bande adhésive, rencontrent des difficultés pour satisfaire à la condition de planéité, et ceci, en raison de la fixation de ce fil par bande adhésive favorisant le cintrage transversal du grillage de part et d'autre du fil métallique.

La présente invention a pour objet de fournir un raidisseur qui remédie à ces inconvénients et qui permet au grillage de faible largeur, de rester à plat, et de se déchirer en lambeaux sans problème.

A cet effet, dans le grillage selon l'invention, le fil métallique s'étend également transversalement sur une partie de la largeur du grillage en décrivant une trajectoire ondulée, sinusoïdale ou en dents de scie et qui, en compensant les contraintes de tension exercée sur la nappe par la bande adhésive, empêche cette nappe de se cintrer.

Avec cet agencement, la rigidité des ondulations obtenues compense l'action de la bande adhésive sur la nappe formant le grillage et maintient celle-ci à plat, ce qui élimine tout problème lors de la pose du grillage dans la fouille.

Lors du sectionnement de la nappe par le godet d'un engin, le fil métallique ne forme plus, comme dans l'art antérieur mettant en oeuvre un fil rectiligne, une armature tendant à retenir les fragments, mais au contraire se développe avant de casser, c'est-à-dire passe de la forme ondulée à une forme rectiligne en laissant le fragment partir avec le godet et sans perturber la signalisation de la proximité du réseau.

Il est fait remarquer que l'approche problème-solution de l'invention est très différente de celle décrite dans le document FR-A-2697094 où le problème est de permettre à coup sur le repérage d'une canalisation par visualisation d'au moins un élément du grillage, tant dans la fouille qu'au niveau du godet, alors que celui de la présente invention est de raidir la nappe étroite pour faciliter sa pose, sans perturber son déchirage ultérieur. Quant à la solution fourni par ce document, elle met en oeuvre un élément allongé, non métallique et ayant une résistance à la traction supérieure à 80DaN, donc supérieure à la résistance des fils métalliques de détection, de l'ordre de 10 DaN.

D'autres caractéristiques et avantages ressortiront de la description qui suit en référence au dessin schématique annexé représentant, à titre d'exemple, une forme d'exécution d'un grillage équipé du raidisseur selon l'invention.

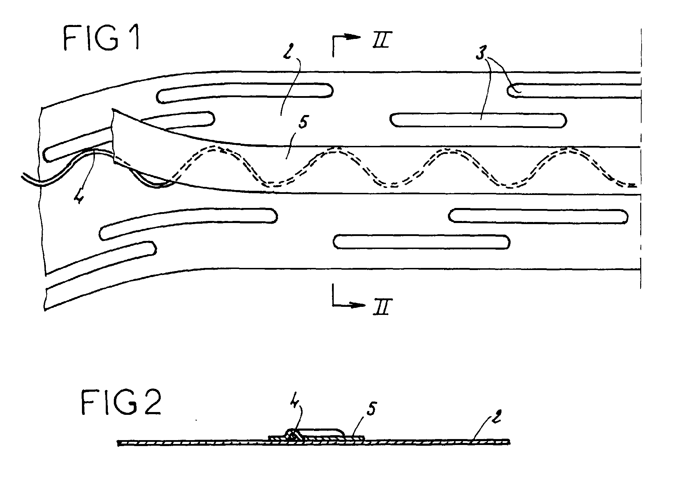

Figure 1 est une vue en plan par-dessus d'une forme d'exécution du grillage avec arrachement partiel de la bande adhésive et de son fil métallique détecteur,
Figure 2 en est une vue en coupe transversale suivant II-II de figure 1.

Dans ce dessin, la référence numérique 2 désigne une nappe étirée en polyéthylène, ou autre matière plastique, comportant des ouvertures ou lacunes 3 s'étendant longitudinalement en rangées parallèles, avec des répartitions identiques ou différentes dans les diverses rangées. 4 désigne un fil métallique et 5 une bande adhésive fixant le fil métallique 4 sur l'une des faces de la nappe 2.

Selon l'invention, le fil métallique 4, qui est normalement distribué suivant une direction longitudinale, s'étend également transversalement sur une partie de la largeur de la nappe en formant, soit une sinusoïde comme représentée, soit un parcours en dents de scie.

Pour les grillages ayant une largeur comprise entre 5 et 10 centimètres, la course de déplacement transversal du fil 4 est comprise entre 20 et 30 % de la largeur de la nappe.

La bande adhésive, qui est représentée ici comme ayant une largeur sensiblement égale à la course de déplacement transversal du fil, peut avoir une largeur supérieure ou inférieure à cette course, pourvu qu'elle assure une bonne liaison du fil avec la nappe 2 sous jacente.

Ce grillage est fabriqué à partir d'une gaine tubulaire réticulée, c'est-à-dire présentant des lacunes. Après étirage transversal de la gaine tubulaire par un conformateur et sectionnement longitudinal de cette gaine au moyen d'un couteau pour former une nappe plate, la nappe obtenue passe à un poste de travail qui dépose sur elle le fil métallique 4 et fixe ce fil par dépôt de la bande adhésive 5 et application sur cette bande de rouleaux d'appui ou de brosses rotatives cylindriques.

Le dépôt du fil 4 sur la nappe 2 est assuré par une tête de distribution qui le déplace transversalement et alternativement dans un sens, puis dans l'autre suivant une course définie et constante. A titre d'exemple, ce déplacement est assuré en montant la tête de distribution du fil sur une glissière transversale et en reliant cette tête à un ensemble bielle-manivelle.

Bien que de préférence le fil métallique 4 soit disposé dans la partie médiane de la nappe 2, il peut également être disposé près de l'un de ses bords.

Quelle que soit sa position sur la nappe et en raison de sa forme ondulée, le fil 4 compense les contraintes de tension exercée sur la nappe 2 par la bande adhésive 5 et empêche que cette nappe tende à se cintrer.

Par ailleurs, lorsque la nappe 2 est sectionnée par l'effort de cisaillement du godet d'un engin de travaux publics, le fil tend naturellement à reprendre sa forme longiforme en se développant jusqu'à la rupture et en offrant ainsi une moindre résistance à l'arrachement d'un fragment de la nappe.

## Revendications

1. Raidisseur transversal pour grillage avertisseur étroit avec fil de détection composé d'une nappe (2) en matière plastique comportant des lacunes longitudinales (3) et d'un fil métallique (4) de détection s'étendant suivant une direction longitudinale, ledit fil ayant une résistance à la traction lui pemettant d'être rompu par le godet d'un engin de creusement et étant fixé sur la nappe (2) par collage au moyen d'une bande adhésive longitudinale (5), le recouvrant au moins localement, **caractérisé en ce qu**'il est constitué par le fil métallique de détection (4) s'étendant également transversalement sur une partie de la largeur de la nappe (2) du grillage en décrivant une trajectoire ondulée, sinusoïdale ou en dents de scie, et compensant les contraintes de tension exerçée sur la nappe par la bande adhésive (5) en empêchant la dite bande de se cintrer.

2. Raidisseur selon la revendication 1, **caractérisé en ce que** la largeur de course de déplacement transversal du fil (4) est comprise entre 20 et 30 % de la largeur de la nappe (2) pour un grillage ayant une largeur comprise entre 5 et 10 centimètres.
